# EUROPEAN PATENT APPLICATION

(11) **EP 1 703 752 A2**
(43) Date of publication of application: **20.09.2006**
(21) Application number: 06111184.5
(22) Date of filing: 15.03.2006
(51) Int. Cl.: H04Q 7/32

(54) **Apparatus and method for distribution of roaming users over preferred networks**

(30) Priority: 15.03.2005 US 661492 P
(71) Applicant: Star Home GmbH, 8024 Zürich (CH)
(72) Inventor: Ophir, Shai, 40696 Moshav Ein-Vered (IL); Fester, Kobi, 69400 Tel Aviv (IL); Wolfman, Shlomo, 45257 Hod-HaSharon (IL)
(74) Representative: Weydert, Robert

(57) **Abstract**

Apparatus for ensuring a controlled distribution of roaming users between preferred networks comprises: a preferred network listing unit configured to specify respectively different preferred networks, an assignment unit for assigning said lists to mobile handset users in accordance with predetermined desired proportions for respective preferred networks, and a download unit associated with the assignment unit for downloading assigned lists to cellular handsets.

## Description

### FIELD AND BACKGROUND OF THE INVENTION

The present invention relates to apparatus and a method for preferred network distribution and, more particularly, but not exclusively to efficient distribution of users over preferred networks that is programmable in advance.

Roaming users are valuable customers of mobile networks and it is of considerable commercial advantage for a home network to be able to control which networks at a visited country, visitor networks, receive roamers. Certain networks may belong to the same group, and certain networks may be more compatible in terms of services provided. Also certain networks may provide better deals to the home network from the commercial point of view.

It is thus known to download to mobile telephones lists of preferred networks for given countries. Generally the download is provided to the SIM card for GSM handsets although it is also possible to download files to CDMA handsets. It is further known to provide prepared lists for multiple countries in advance so that with a single download the user receives a file informing him of all of the preferred networks for each country he is likely to visit. It is also known to manage the preferred networks from the cellular infrastructure, so that the handset is externally guided as to the preferred network.

It is further known to refresh the lists of preferred networks. In a given country it might be desired to move from one operator to another, or it might be desired to split the user base between different operators. Now this is easy where the selection of the preferred network is carried out by the cellular infrastructure, since updating can be carried out dynamically at the infrastructure. However, if the list is kept at the mobile handset, then the mobile handset needs to be updated every time a change is made and every time it is desired to move the handset from one roaming network to another. However frequent downloads to SIM cards are problematic in terms of network resource usage. Furthermore, there is a need to provide overall management of roaming distribution, and overall management cannot be achieved by the single handset, but only via a system that controls all handsets in a centralized fashion.

There is thus a widely recognized need for, and it would be highly advantageous to have, a preferred network distribution system devoid of the above limitations.

### SUMMARY OF THE INVENTION

According to one aspect of the present invention there is provided apparatus for ensuring a controlled distribution of roaming users between preferred networks comprising:
a preferred network listing unit configured to specify respectively different preferred networks for use in a roaming country,
an assignment unit for assigning said networks to downloadable lists in accordance with predetermined desired proportions for respective preferred networks, and
a download unit associated with the assignment unit for downloading said downloadable lists to cellular handsets.

According to a second aspect of the present invention there is provided a method for ensuring a controlled distribution of roaming users between preferred networks comprising:
specifying respectively different preferred networks,
assigning said networks to downloadable lists in accordance with predetermined desired proportions for respective preferred networks, and
downloading said lists to cellular handsets.

Unless otherwise defined, all technical and scientific terms used herein have the same meaning as commonly understood by one of ordinary skill in the art to which this invention belongs. The materials, methods, and examples provided herein are illustrative only and not intended to be limiting.

Implementation of the method and system of the present invention involves performing or completing certain selected tasks or steps manually, automatically, or a combination thereof. Moreover, according to actual instrumentation and equipment of preferred embodiments of the method and system of the present invention, several selected steps could be implemented by hardware or by software on any operating system of any firmware or a combination thereof. For example, as hardware, selected steps of the invention could be implemented as a chip or a circuit. As software, selected steps of the invention could be implemented as a plurality of software instructions being executed by a computer using any suitable operating system. In any case, selected steps of the method and system of the invention could be described as being performed by a data processor, such as a computing platform for executing a plurality of instructions.

### BRIEF DESCRIPTION OF THE DRAWINGS

The invention is herein described, by way of example only, with reference to the accompanying drawings. With specific reference now to the drawings in detail, it is stressed that the particulars shown are by way of example and for purposes of illustrative discussion of the preferred embodiments of the present invention only, and are presented in order to provide what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
Fig. 1 is a simplified diagram showing an apparatus for preferred network distribution according to a first preferred embodiment of the present invention;
Fig. 2 is a simplified diagram illustrating a modification of the apparatus of Fig. 1 for multiple countries requiring different distributions;
Fig. 3 is a screen shot illustrating a window for setting preferred networks according to a preferred embodiment of present invention;
Fig. 4 is a screen shot illustrating the assignment of percentages to each preferred network, according to a preferred embodiment of present invention;
Fig. 5 is a screen shot illustrating a deviation between assigned and actual real time percentages, according to a preferred embodiment of the present invention;
Fig. 6 shows manual correction of the deviation of Fig. 5; and
Fig. 7 illustrates automatic correction of the deviation of Fig. 5 according to a preferred embodiment of the present invention.

### DESCRIPTION OF THE PREFERRED EMBODIMENTS

The present embodiments comprise an apparatus and a method for assigning preferred networks to different roaming users such as to divide different preferred networks between different users in a controlled way.

The principles and operation of an apparatus and method according to the present invention may be better understood with reference to the drawings and accompanying description.

Before explaining at least one embodiment of the invention in detail, it is to be understood that the invention is not limited in its application to the details of construction and the arrangement of the components set forth in the following description or illustrated in the drawings. The invention is capable of other embodiments or of being practiced or carried out in various ways. Also, it is to be understood that the phraseology and terminology employed herein is for the purpose of description and should not be regarded as limiting.

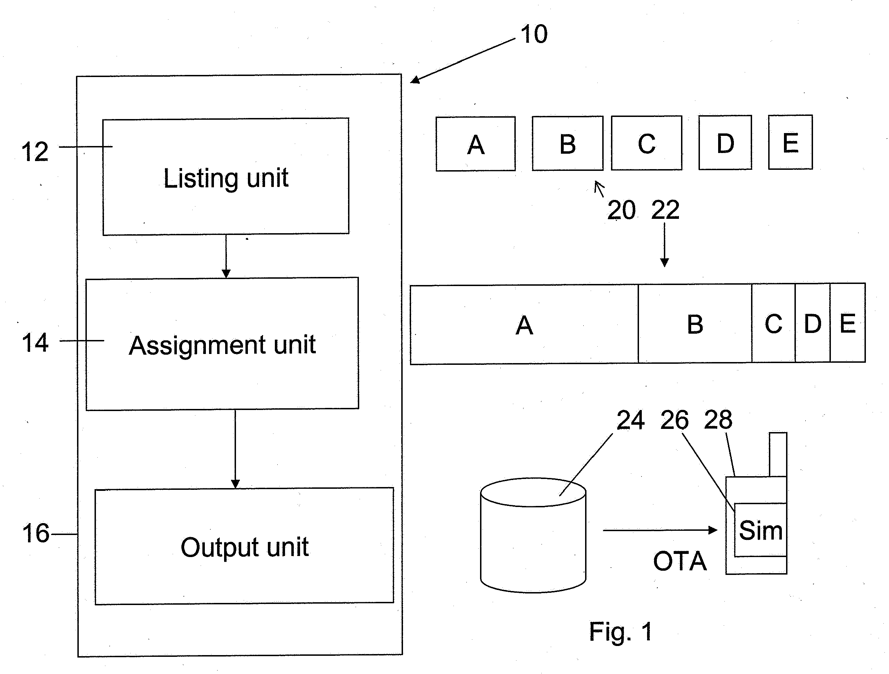

Reference is now made to Fig. 1, which illustrates apparatus 10 for ensuring a controlled distribution of roaming users between preferred networks. Apparatus 10 comprises a preferred network listing unit 12 which lists a plurality of preferred networks 20. Each list item 20A, 20B.... is a different network which is preferred, perhaps to a different extent. Alternatively each item is itself a list and includes some or all of the preferred networks but places a different network first. There may be several networks for each country, and typical countries have been two and five networks. As will be explained below, overall lists of preferred networks as finally produced may be multi-country, meaning they combine several sub-lists for individual countries.

Assignment unit 14 assigns to the networks A to E predetermined desired proportions. Thus for example, in space 22, a high proportion is applied to network A and a small proportion is applied to network E. Each user is given one network, but the networks are assigned according to the predetermined proportions so that the overall assignment pattern amongst all the roaming users is in accordance with the desired proportions. As a result the roamers as a whole are divided between different preferred networks in accordance with the initially preferred proportions. Thus it may be decided to send 40% of roamers to network A, 30% to network B, and 10% each to C, D and E respectively. Hence 40% of roamers are downloaded a preferred network listing (PLMN) giving them A as their preferred network, 30% are given B, and 10% each are given C, D and E.

A download unit 16 is connected to the assignment unit and downloads assigned lists to the individual cellular handsets as needed. The download unit manages the Over the Air (OTA) protocol for downloading the preferred network lists from a server 24 on which the apparatus 10 is housed to the SIM card 26 of the mobile telephone 28 of the individual user.

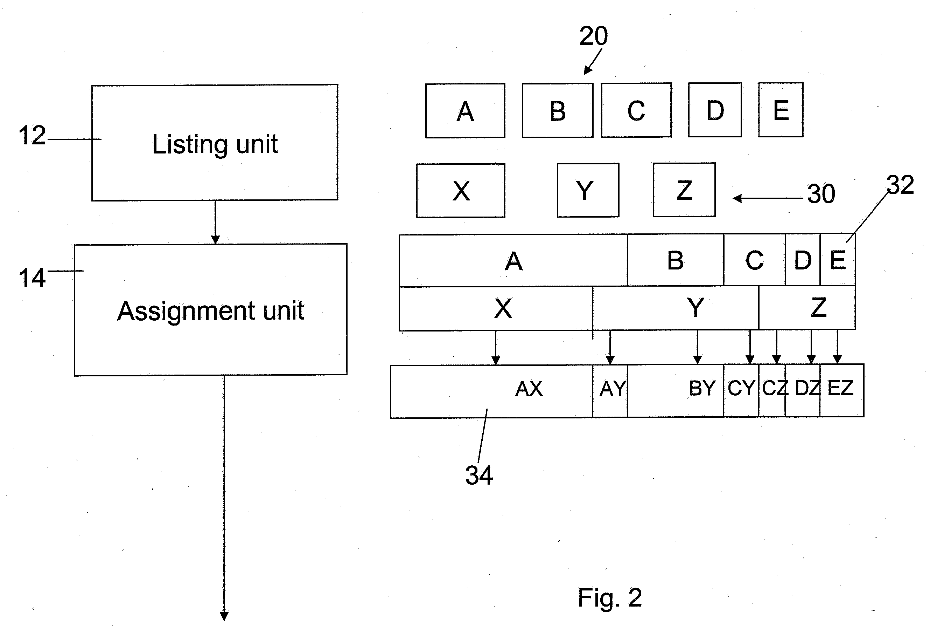

Reference is now made to Fig. 2, which is a simplified schematic diagram illustrating how lists can be constructed which each specify preferred networks from a plurality of countries and yet maintain the preferred networks of each country in the desired proportions. In Fig. 2 the different preferred networks are provided at the listing unit. Networks 20A to 20E are provided for a first country and networks 20X to 20Z are provided for a second country. Then, in the assignment unit the networks from the two countries are given separate spaces, country space, and assigned proportions across the country space, here given as a row. The two different country spaces are lined up and then multi-country lists are generated from the columns, so that each user receives a preferred network for each country and the correct proportions of users are assigned to the different networks for each country. For each country the different networks retain their desired proportions and yet only a single list needs to be downloaded to serve roamers traveling through numerous countries. The lists may be prepared to any desired resolution level, say ten percent resolution, as will be explained in greater detail hereinbelow.

The assignment unit preferably receives the proportion settings from a system operator, who may set the proportions in accordance with the business requirements of the home network or according to contract clauses settled with the roaming networks.

As explained, the proportion settings for preferred networks for each of said plurality of countries are independent.

As explained, the assignment unit divides a space per country into proportional groups and assigns preferred networks over the space in accordance with the input proportion settings, and
creates lists over a plurality of countries based on the divisions of the space across the countries.

Apparatus 10 preferably creates a basic list including core countries and additional lists including one or more non-core countries. Alternatively different lists may be created of different geographical areas including neighboring countries or countries which are statistically visited by the same people.

Downloading of preferred network lists to the SIM card using the OTA protocol is discussed in Starhome patent application EP 04101190.9 and US 10/806,281, the contents of which are incorporated herein by reference. Therein are disclosed methods for discovering outbound roaming registration at a roaming mobile network, using an SS7 probe connected to the SS7 MAP international links, or a signaling relay performing the same function.

The present embodiments refer to the GSM network and the downloading of a list to a SIM card. However this is merely exemplary and the same principle can be applied to a CDMA roaming preferred list, or to any other network which supports predefined preferences for roaming network selection.

The present embodiments relate to the option of downloading PLMN lists (preferred network lists) to the subscriber's SIM card while he is still at home, before traveling, and describes a way to create those lists. The use of such a list increases the chances that the handset will use the correct preferred list at the first registration attempt while in roaming. Typically during travel the power has been off due to flight regulations.

A goal of the method described herein is to control the distribution of roaming in the country level. The home network may for example have a roaming agreement with three visited networks for example in a certain country, V1, V2, V3. However the home network may for some reason like to have its subscribers divided 70%, 20%, 10%, as opposed to equally or arbitrarily.

### Controlling distribution

Referring again to Fig. 1 it is possible to initially download preferred lists to all subscribers, or to a certain community of subscribers, based on a predefined distribution. The number of lists depend on a desired percentage. In the following let us assume three operators for each of 100 countries, and further assume the network operator requires the same distribution of (70%, 20%, 10%) for all countries. Now if the list downloaded to the SIM card could hold a hundred items (not actually practical with a SIM card), then only three different lists would be necessary, one delivered to 70% of users, one to 20% and the last to the remaining 10%. But since a practical list may contain ~20 items only, a first complication is that the 100 countries have to be divided into five groups. The operator defines the distribution of the country lists among the subscribers according to the importance of individual countries. The result is 3x5 lists.

Referring again to Fig. 2 we consider the case that the distribution is not common to all countries. Say in one country the requirement is for 50%, 30%, 20%, and in the second country the requirement is for 40%, 30%, 30%. In this case more lists are generated. Now, provided that resolution is restricted to 10% it is possible to reach all possible distributions with just 10 different lists. Thus for a distribution of three operators, A, B and C in proportions of 70%, 20%, 10% one assigns operator A to seven of the ten lists. Operator B is assigned to two of the lists, and operator C once. (i.e. A,A,A,A,A,A,A,B,B,C). Now, for reaching 50%,30%,20% in another country, one assigns X,X,X,X,X,Y,Y,Y,Z,Z over the same 10 lists. Again, with 100 countries one splits the lists into five groups of 20 each, thus leading to
10 x 5 = 50 lists.

Now it is given that one cannot download five lists to each telephone, since the SIM card does not currently have the required memory. It is possible therefore for a user to find himself in a given country without a preferred network specified. In such a case the relevant list is preferably downloaded on arrival as the home network detects his presence in the given country. Download of an updated list while in roaming is possible since the intelligent gateway or home network finds out where the roamer is located and can send the relevant list via the intelligent gateway. Since there may be a hundred countries with roaming agreements of concern, it may well be that the relevant country is not represented in the current list. Alternatively, the country may exist on the list, but at the bottom, and several handsets do not handle more than the top five to eight items on the list, ignoring the rest. When a preferred network update server, which may be associated with the home network or with the intelligent gateway, detects a new registration, it downloads a new list, with the relevant country, and possibly its neighboring countries, on top.

After creating the lists, the lists are given arbitrarily to the inbound roamers roaming at the same countries composing the list. The rules of statistics generally ensure that the visitors in each country are distributed between the networks in the same way as the assigned files are distributed.

Now it may be that the actual distribution does not achieve the requested distribution, for all kinds of reasons. The most likely is that the group of roamers going to a particular country at any particular time is too small to behave statistically. In such a case the application may ALTER the current list with an updated one, in order to improve results. For example, if the subscriber has VF UK as its preferred network, but at the time the home network would like to increase usage of rival 02 UK network; it is possible to send an updated list to the roamer in which VF UK is replaced with 02 UK.

The skilled person will appreciate that in order to get a resolution of individual percentages (i.e. 7%, 12% etc.), one will need 100 lists at the most. It will be appreciated that with computer technology it is relatively straightforward to generate a hundred lists and manage them.

An alternative method comprises generating lists on a per subscriber basis, where the system generates a specific list for each user, according to the distributions defined for the country as operating at that time. In this method therefore the lists given to an individual user are not generated before the download, but ad-hoc, and are stored on a per-subscriber basis. Each user receives a list correcting the actual network usage to the desired network usage at that time.

Whichever of the two embodiments is used, the PLMN list is assigned to each handset according to any provisioned communities and the roaming distributions discussed above.

PLMN lists are in one embodiment downloaded to the target SIMs prior to roaming, that is in the home country. Alternatively, as mentioned below, the updates may be made dynamically during roaming. The operator may select the entire installed base or part of it, for example all known frequent travelers.

Based on the provisioned communities and Roaming Distributions, the IPN preferably creates and assigns a PLMN list to each target handset.

The IPN preferably stores and manages an identity of the PLMN list that was downloaded to each SIM, or IMSI.

Four main cases are identified as follows:
a. One unified distribution to all 2/3/4/5-network countries, with no communities.
b. N different distributions to 2/3/4/5-network countries, with no communities.
c. N different distributions to 2/3/4/5-network countries, with communities.
d. Case where the SIM can store less entries (networks) than the desired (target) number of networks.

1. The examples are based on 3-network countries. However the skilled person will appreciate how to apply the same principles to 2/4/5-networks countries.

### Assumptions

1. N - Number of target countries (e.g. 100)
2. L - Number of entries in the PLMN list that the SIM can process.
3. D = Number of distributions, each in units of 10% (i.e. 10; 20, 30, ...)
4. Case 1
   L=100
   D =1 (i.e. unified distribution to all countries, e.g. A-70%, B-20%, C-10%).
5. Case 2
   L=20
   D =1 (i.e. unified distribution to all countries, e.g. A-70%, B-20%, C-10%).
6. Case 3
   L = 100
   D =3 (e.g. A-70%, B-20%, C-10% ; X-60%, Y-30%, Z-10% ; S-80%, T-10%,U-10%).
7. Case 4
   L=20
   D =3 (e.g. A-70%, B-20%, C-10% ; X-60%, Y-30%, Z-10% ; S-80%, T-10%, U -10%).
8. No communities, one distribution per country.
9. P = Number of lists that need to be created

### Case 1

1. P = 3.
2. List #1 includes A as the preferred network in each country. Loaded to 70% of the IMSI's.
3. List #2 includes B as the preferred network in each country. Loaded to 30% of the IMSI's.
4. List #1 includes C as the preferred network in each country. Loaded to 10% of the IMSI's.

### Case 2

1, P = 15 (5 x 3).
2. List #1 of case 1 above is divided into 5 sub-lists each containing network A of different 20 countries.
3. List #2 of case 1 above is divided into 5 sub-lists each containing network B of different 20 countries (identical country sub-lists as above).
4. List #3 of case 1 above is divided into 5 sub-lists each containing network C of different 20 countries (identical country sub-lists as above).
5. The 5 sub-lists containing PLMN A are loaded to 70% of the IMSI's in the following manner:
   a. Each sub-list (list) is allocated a unique priority of 1 (high) to 5 (low).
   b. The highest priority sub-list (1) includes the most visited countries while the lowest priority sub-list (5) includes the least visited countries.
6. Each priority is assigned a percentage summing up to 100% (e.g. 60%, 20%, 10%, 5%, 5%), therefore:
   a. Sub-list 1 is loaded to 60% of the 70% IMSI's that were allocated to A.
   b. Sub-list 2 is loaded to 20% of the 70% IMSI's that were allocated to A.
   c. Sub-list 3 is loaded to 10% of the 70% IMSI's that were allocated to A.
   d. Sub-list 4 is loaded to 5% of the 70% IMSI's that were allocated to A.
   e. Sub-list 5 is loaded to 5% of the 70% IMSI's that were allocated to A.

### Case 3

1. P = 10.
2. For achieving 70%, 20%, 10%
   a. Load PLMN A in 7 of the 10 lists
   b. Load PLMN B in 2 of the 10 lists
   c. Load PLMN C in 1 of the 10 lists
3. For achieving 60%, 30%, 10%
   a. Load PLMN X in 6 of the 10 lists
   b. Load PLMN Y in 3 of the 10 lists
   c. Load PLMN Z in 1 of the 10 lists
4. For achieving 80%, 10%, 10%
   a. Load PLMN S in 8 of the 10 lists
   b. Load PLMN T in 1 of the 10 lists
   c. Load PLMN U in 1 of the 10 lists

### Case 4

P = 50 (5 x 10).

As in case 2, if the SIM can process less than 100 entries we can divide the 100 into sub-lists and prioritize each of them.

In this case (L=20) we divide each of the 10 lists into 5 sub-lists resulting in 50 lists to be loaded in the same logic as in case 2.

### Communities

For supporting communities the above four cases are preferably managed separately for each community, which may alternatively be regarded as separate layers.

The number of layers equals the number of communities, so if M = number of communities then the managed number of lists is P_{T} = M x P.

### Preferred List Management

On the visited country level the operator configures the network preferences. Preferences may be configured either in Boolean terms i.e. "Preferred" or "Not-preferred" or in terms of percentage allocation in descending order.

According to the configured preferences the application creates the necessary PLMN lists to be downloaded. Once downloaded the application keeps track of the stored list in each and every SIM during roaming, including subsequent updates.

### Boolean Preference Configuration

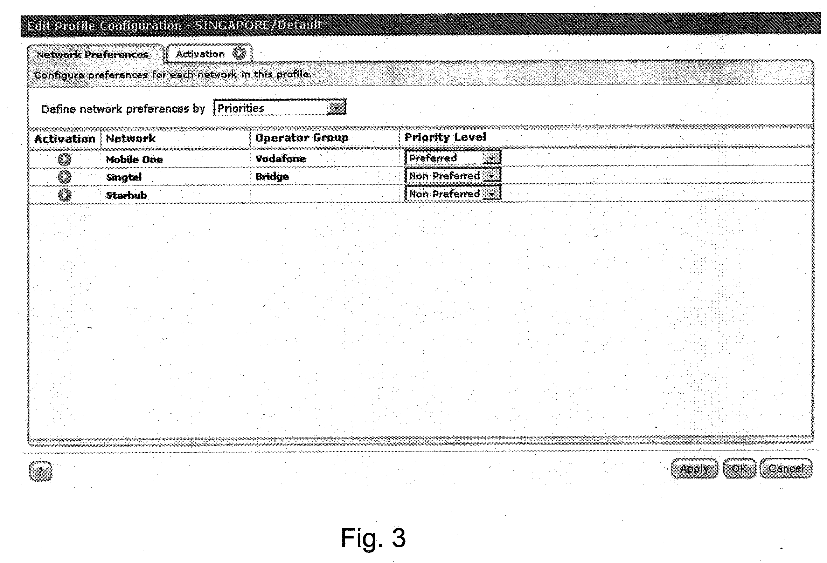

Reference is now made to Fig. 3, which is an example of provisioning the preferences in a country using the Boolean values of preferred/not-preferred.

### Roaming Percentage Distribution

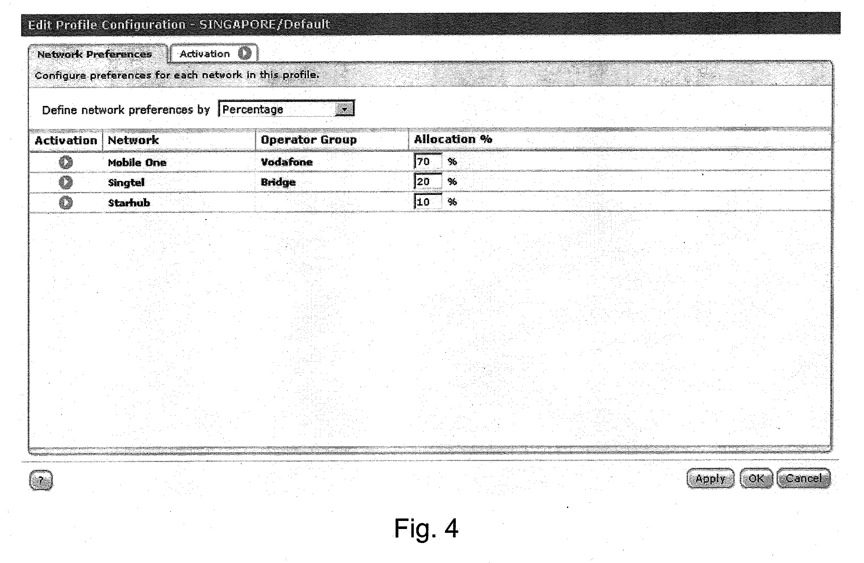

Reference is now made to Fig. 4, which is a screen shot of a window for allocating percentages to networks. The operator is able to allocate a pre-configured percentage of its outbound roamers to each network in the visited country. For example:
70% - to network A
20% - to network B
10% - to network C

Percentage values have to be provisioned in multiples of 10%. The way of implementing the desired distribution is described in the following section.

### Creating the PLMN Lists

Based on the provisioned preferences - Boolean or Roaming Distribution - IPN creates, assigns and maintains a PLMN list for each target handset. Each list ' holds a unique I.D. and every SIM (IMSI) is associated with a unique PNL-ID. This information is maintained in order to avoid unnecessary future downloads.

### The Method

If a country group uses only Boolean preferences for all countries in the group, then IPN creates only one PNL for the entire Country Group. One would wish to do this for countries of marginal roaming significance.

For each Country Group (CG) that uses roaming percentage distributions the IPN creates 10 lists: CG1 to CG10.

Each network in a CG appears in the number of PNL's that is equal to its 10% multiplier, e.g. each network appears in 7 lists if the allocated percentage is 70%.

The IPN makes sure that at any given time, each of the 10 PNL's is stored in 10% of the subscribers roaming in the CG.

Note: The pace of sending PNL's to the OTA can be adapted to the pace of arrival of roamers.

If the preferences for a certain country are provisioned in Boolean values then the PLMN lists are actually based on 0% to the non-preferred network, while the 100% is split among the preferred networks. If in fact there is only one network then this network is assigned 100%.

### Example 1 - No Boolean Preferences Only

A Country Group CG1 includes 4 countries W, X, Y and Z. The networks in all these countries are provisioned with preferences in Boolean only, assigning one preferred network in each, as shown in Table 1

**Table 1, Assignment with Boolean Preferences**

| **CG1** | | | | | | | | |
|---|---|---|---|---|---|---|---|---|
| **Country** | **W** | | **X** | | **Y** | | **Z** | |
| Network / % | W1 | PN | X1 | PN | Y1 | PN | Z1 | PN |
| | W2 | NPN | X2 | NPN | Y2 | NPN | Z2 | NPN |
| | W3 | NPN | X3 | NPN | Y3 | NPN | | |
| | | | | | Y4 | NPN | | |
| Total % | | n/a | | n/a | | n/a | | n/a |

For such a Boolean country group, a single list is created as in table 2:

**Table 2, list for a four country group (CG2) each country having a single preferred network.**

| **CG2-1** |
|---|
| W1 |
| X1 |
| Y1 |
| Z1 |

### Example 2 - Roaming Distribution and Boolean

A Country Group CG1 includes 4 countries A, B, C and D. The networks as well as their allocated preferences in each country are as in Table 3:

**Table 3, % Preferences for different networks in three countries**

| **CG2** | | | | | | | | |
|---|---|---|---|---|---|---|---|---|
| **Country** | **A** | | **B** | | **C** | | **D** | |
| Network / % | A1 | 70% | B1 | 70% | C1 | 60% | D1 | PN |
| | A2 | 20% | B2 | 30% | C2 | 20% | D2 | NPN |
| | A3 | 10% | | | C3 | 10% | D3 | NPN |
| | | | | | C4 | 10% | | |
| Total 5 | | 100% | | 100% | | 100% | | n/a |

In the case of Table 3, ten lists are created, as shown in table 4:

**Table 4 - Preferred Network lists based on Table 3**

| **CG2-1 2** | **CG2-** | **CG2-3** | **CG2-4** | **CG2-5** | **CG2-6** | **CG2-7** | **CG2-8** | **CG2-9** | **CG2610** |
|---|---|---|---|---|---|---|---|---|---|
| A1 | A1 | A1 | A1 | A1 | A1 | A1 | A2 | A2 | A3 |
| B1 | B1 | B1 | B1 | B1 | B1 | B1 | B2 | B2 | B2 |
| C1 | C1 | C1 | C1 | C1 | C1 | C2 | C2 | C3 | C4 |
| D1 | D1 | D1 | D1 | D1 | D1 | D1 | D1 | D1 | D1 |

### Sending PLMN lists to handsets

The IPN sends the preferred network or PLMN list to a SIM in response to one of the following events:
*updateLocation* message is probed and the SIM is marked with empty or invalid PNL according to the country / Country Group.

The operator has initiated a proactive PNL update in order to correct unsatisfying actual Roaming Distribution.

Depending on the operator and/or on the SIM/OTA vendor, the update of a PLMN list onto the handset can be done in any of the following ways:
Send the entire new list, or
Send updates to selected entries in the SIM list

### New lists taking effect

It should be noted that not all handsets support automatic **Refresh**. Hence downloading a new PLMN list normally takes effect upon turning the HS off and on. Operators who perceive this issue as problematic may consider the use of an Integrated SS7 and SIM Solution. Alternatively the operator may **mass update** the PLMN lists of these handsets while at the HPMN so that the preferred selection will take place upon arrival at the foreign country.

### Reporting and adaptive corrections

### The Actual Distribution report

Due to various objective conditions such as coverage, roamers not turning their handset off or lack of Refresh support by handsets, the provisioned Roaming Distribution may not always be achieved.

The operator can specify a maximum allowed deviation percentage of the actual distribution from the desired one. The Actual Distribution report indicates those differences.

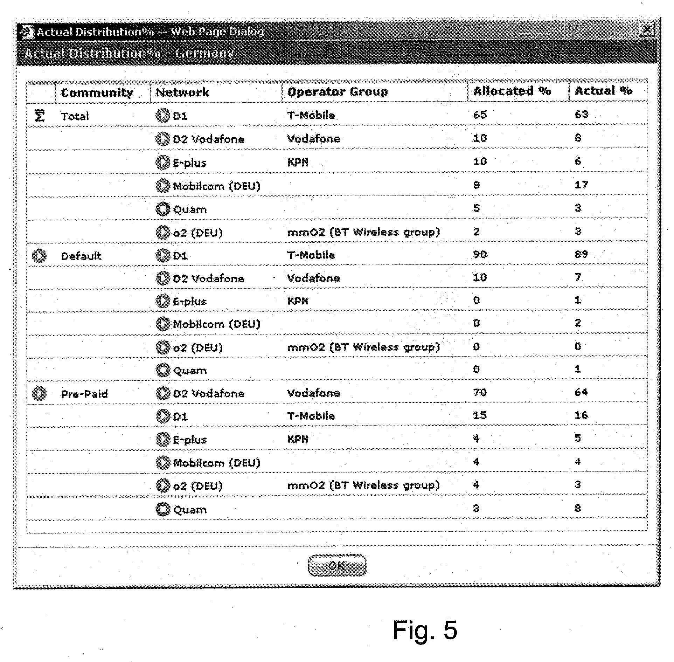

Fig. 5 illustrates a screen shot of a typical on-line view of a distribution report showing the actual roaming distribution vs. the provisioned one.

### Correcting the actual roaming distribution

When detecting deviations of the actual Roaming Distributions from the provisioned ones the user may set an allowed tolerance. Then when the distribution is higher than the allowed tolerance, the operator may initiate proactive corrections in either of the following ways:
Manually modify the provisioned percentage, or
Ask the IPN to automatically modify the percentage allocations

### Manual corrections

When noticing exceptional deviations the operator can modify the provisioned percentage allocations, e.g. adding extra % to the preferred network on the account of the non-preferred networks.

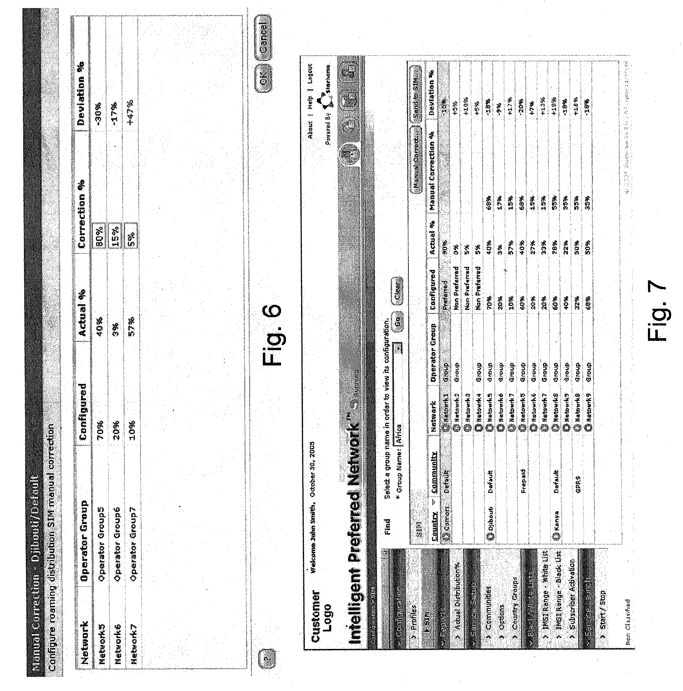

Fig. 6 is a screen shot illustrating manual correction. In Fig. 6 it is seen that the operator added 10% to Network5 reducing 5% from each of the less preferred networks.

### Automatic corrections

If automatic correction is desired then the operator can select the following:

He may tell the IPN to update PLMN lists to handsets in countries where the deviation exceeds the maximum allowed. In addition he may tell the IPN to send Refresh command to handsets that support such a feature. Such activity may be performed using the screen in Fig. 7.

As a result the application creates a new SIM distribution by increasing the % of the PN by a pre-configured percentage (e.g. 5%) on the account of the other networks proportionally.

From now on the application treats new empty SIM cards according to the new SIM distribution.

The operator may subsequently request additional corrections which may lead to say a further portion shift of X% (5% in the example above).

The operator is able to display the current SIM distribution and reset it (back to the provisioned Roaming Distribution).

### Special campaigns

The operator may decide on mass PLMN list modifications for special campaigns such as when mega-events take place in foreign countries. Prior to events like sports, music, exhibitions etc. the operator may agree with selected roaming partners on special tariff in return of redirecting its outbound roamers to that partner network.

It is expected that during the life of this patent many relevant devices and systems will be developed and the scope of the terms herein, is intended to include all such new technologies *a priori.*

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination.

Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims. All publications, patents, and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention.

## Claims

1. Apparatus for ensuring a controlled distribution of roaming users between preferred networks comprising:
a preferred network listing unit configured to specify respectively different preferred networks for use in a roaming country,
an assignment unit for assigning said networks to downloadable lists in accordance with predetermined desired proportions for respective preferred networks, and
a download unit associated with the assignment unit for downloading said downloadable lists to cellular handsets.

2. The apparatus of claim 1, wherein said plurality of downloadable lists each specify preferred networks from a plurality of countries.

3. The apparatus of claim 2, wherein said preferred network assignment unit is configured to input proportion settings for each of said preferred networks and to output said plurality of downloadable lists such that a given network appears on said plurality of downloadable lists in accordance with said proportion.

4. The apparatus of claim 3, wherein proportion settings for preferred networks for each of said plurality of countries are independent.

5. The apparatus of claim 4, wherein said preferred network assignment unit is configured to
a) divide a space per country into proportional groups and assign preferred networks to said proportional groups in accordance with said input proportion settings, and
b) create said downloadable lists over a plurality of countries based on the divisions of said space within said countries.

6. The apparatus of claim 4, wherein said preferred network assignment unit is configured to create a basic list including core countries and additional lists including one or more non-core countries.

7. The apparatus of claim 4, wherein said apparatus is configured to retain an identification of a list downloaded to a given roamer, thereby to detect that said roamer has arrived in a country not on said downloaded list, thus to trigger download of a new list to said given roamer.

8. The apparatus of claim 7, wherein different lists for said country are available in said desired proportions and wherein one of said different lists is downloaded at random to said given roamer.

9. The apparatus of claim 7, comprising a probe for detecting triggers indicating roaming registrations of mobile handsets, and configured such that detection of a trigger leads to a determination of the need to download a new list.

10. The apparatus of claim 1, further comprising a monitoring unit for monitoring actual distribution of roamers over networks, thereby to realign said distribution upon detection of a deviation from an intended distribution.

11. The apparatus of claim 1, further configured to provide a Boolean distribution for countries wherein a single network is preferred.

12. A method for ensuring a controlled distribution of roaming users between preferred networks comprising:
specifying respectively different preferred networks,
assigning said networks to downloadable lists in accordance with predetermined desired proportions for respective preferred networks, and
downloading said lists to cellular handsets.

13. The method of claim 12, wherein said downloadable lists comprise preferred networks for a plurality of countries.
